# DEMANDE DE BREVET EUROPEEN

(11) **EP 1 617 069 A1**
(43) Date de publication de la demande: **18.01.2006**
(21) Numéro de dépôt: 05300443.8
(22) Date de dépôt: 01.06.2005
(51) Int. Cl.: F02M 25/07

(54) **Dispositif de recirculation partielle des gaz d'échappement dans un moteur à combustion interne et procédé associé**

(30) Priorité: 01.06.2004 FR 0405885
(71) Demandeur: Renault, 92109 Boulogne Billancourt (FR)
(72) Inventeur: CLEMENT, Christophe, 92500, RUEIL MALMAISON (FR); WILLIAM, Johann, 92150, SURESNES (FR)

(57) **Abrégé**

Dispositif de recirculation partielle des gaz d'échappement dans la chambre de combustion d'un moteur à combustion interne, notamment pour véhicule automobile, du type comprenant une conduite de recirculation (28) et une vanne de recirculation commandée (28a), caractérisé par le fait qu'un dispositif d'injection d'eau (31) est monté dans la conduite de recirculation (28) et que l'eau injectée provient d'un réservoir (14) capable de récupérer l'eau contenue dans les gaz d'échappement et obtenue par condensation dans un condenseur (13) monté sur la conduite d'échappement du moteur

## Description

L'invention concerne le domaine automobile et plus particulièrement le fonctionnement d'un moteur à combustion interne qu'il soit du type à allumage commandé ou du type Diesel.

Les restrictions d'émission de polluants à l'échappement des moteurs à combustion interne de véhicules automobiles nécessitent le développement de stratégies de dépollution de plus en plus efficaces. L'une de ces stratégies consiste à faire recirculer une partie des gaz d'échappement issus de la combustion au moyen d'une conduite de recirculation partielle des gaz d'échappement (EGR). La réintroduction des gaz d'échappement à l'admission du moteur permet en effet de diminuer la température de combustion à l'intérieur des cylindres et donc de définir un compromis entre l'émission des particules et l'émission d'oxydes d'azote NOx.

Une telle recirculation partielle des gaz d'échappement peut être faite avec des gaz à haute température, notamment lors des phases de démarrage du moteur. On peut également refroidir les gaz d'échappement recyclés afin de ne pas pénaliser le remplissage en air frais auquel les gaz d'échappement recyclés sont mélangés et afin de limiter l'apparition de phénomène de cliquetis sur un moteur à combustion interne à allumage commandé. Dans le cas d'un tel refroidissement des gaz d'échappement il est nécessaire de prévoir dans le circuit de recirculation (circuit EGR) un échangeur de chaleur pour refroidir les gaz d'échappement. Compte tenu cependant des problèmes de compacité du moteur au voisinage de la culasse et du bloc moteur, il est généralement très difficile d'utiliser des échangeurs de grande surface et donc d'atteindre des températures suffisamment basses pour les gaz d'échappement recyclés.

On connaît par ailleurs des dispositifs de récupération de l'eau se trouvant dans le carburant alimentant le moteur à combustion.

La demande de brevet européen EP-A-1 209 345 (FilterWerk Mann & Hummel) décrit un tel dispositif permettant de récupérer l'eau se trouvant dans le carburant qui alimente le moteur à combustion interne. Un filtre placé sur la conduite d'amenée du carburant permet la récupération d'une certaine quantité d'eau qui est ensuite injectée dans le circuit de recirculation des gaz d'échappement ou, en variante, directement dans la chambre de combustion.

On connaît également par les demandes de brevets européens EP-A-1 205 659 et EP-A-1 070 838 (Wärtislä) des procédés de réduction de la quantité d'oxydes d'azote NOx dans l'échappement d'un moteur à combustion interne équipé d'un turbocompresseur par injection d'eau provenant d'une source externe directement dans les chambres de combustion du moteur ou dans l'air admis dans les chambre de combustion et la demande de brevet WO-03/031 794 (Southwest Research) décrit quant à elle une injection combinée d'eau et d'un carburant oxygéné dans un moteur à combustion interne du type Diesel sans toutefois préciser la provenance de l'eau ainsi injectée.

On sait également récupérer l'eau contenue dans les gaz d'échappement issus de la combustion dans le moteur par refroidissement des gaz d'échappement et condensation partielle. C'est ainsi que dans la demande de brevet WO-A-03/001046 (Alstom) l'eau récupérée par condensation à partir des gaz d'échappement et stockée dans un réservoir, est ensuite amenée jusqu'à un évaporateur qui la vaporise, la vapeur obtenue étant mélangée à l'air admis dans le moteur.

La demande de brevet WO-A-01/92710 (Emitec) prévoit également de récupérer l'eau des gaz d'échappement issus du moteur par condensation. L'eau récupérée, stockée dans un réservoir, est utilisée en vue d'une injection directe dans le moteur thermique afin de réduire les émissions de CO₂ et d'oxydes d'azote NOx.

Compte tenu de ces différents dispositifs connus, l'invention a pour objet d'améliorer le refroidissement des gaz d'échappement recyclés.

L'invention a également pour objet de diminuer l'apparition des phénomènes de cliquetis.

Le dispositif selon un aspect de l'invention, permet une recirculation partielle des gaz d'échappement dans la chambre de combustion d'un moteur à combustion interne, notamment pour véhicule automobile. Le dispositif comprend une conduite de recirculation, une vanne de recirculation commandée et un dispositif d'injection d'eau monté dans la conduite de recirculation. L'eau injectée provient d'un réservoir capable de récupérer l'eau contenue dans les gaz d'échappement et obtenue par condensation dans un condenseur monté sur la conduite d'échappement du moteur.

Dans un mode de réalisation, le dispositif peut comprendre en outre un échangeur de chaleur monté dans la conduite de recirculation pour augmenter encore le refroidissement des gaz d'échappement recyclés. Cet échangeur peut cependant être de dimensions faibles compte tenu de l'injection d'eau qui provoque déjà un refroidissement par vaporisation d'une partie de l'eau liquide injectée.

Un moyen de régulation de la quantité d'eau injectée peut avantageusement être prévu.

Dans un mode de réalisation, le réservoir peut également être relié à un dispositif condenseur d'une installation de climatisation équipant le véhicule automobile. La quantité d'eau récupérée lors des déplacements du véhicule est ainsi augmentée.

Dans un mode de réalisation préféré, un dispositif d'injection d'eau est également monté dans la chambre de combustion du moteur et alimenté en eau provenant du réservoir. Cette injection d'eau liquide directement dans la chambre de combustion réduit encore les émissions de polluants et diminue les risques de cliquetis en augmentant la quantité totale d'eau injectée dans les cylindres du moteur.

L'invention s'applique à tout type de moteur. Lorsque le moteur est équipé d'un groupe turbocompresseur, le condenseur et le réservoir sont montés en aval de la turbine.

Dans ce cas, un dispositif détendeur est avantageusement monté an aval de la turbine pour refroidir les gaz d'échappement avant qu'ils pénètrent dans le condenseur.

L'invention permet de refroidir les gaz d'échappement recirculés (EGR) pour les phases de fonctionnement du moteur qui nécessitent un tel refroidissement ; pour les phases de fonctionnement qui reqièrent au contraire des gaz recirculés (EGR) chauds, par exemple au démarrage du moteur, le dispositif de l'invention peut être complété par une conduite de dérivation munie d'une vanne de commutation commandée montée sur la conduite de recirculation des gaz d'échappement de façon à by-passer le dispositif d'injection d'eau. La vanne de commutation peut être commandée de façon que les gaz recirculés (EGR) passent directement par la conduite de dérivation sans être refroidis.

Un autre aspect de l'invention concerne un procédé de recirculation partielle des gaz d'échappement dans la chambre de combustion d'un moteur à combustion interne, notamment pour véhicule automobile, dans lequel on injecte de l'eau sous forme liquide dans les gaz d'échappement recyclés et dans la chambre de combustion du moteur, l'eau injectée provenant de la condensation des gaz d'échappement issus du moteur.

En variante, l'eau injectée provient également en partie d'une installation de climatisation équipant le véhicule automobile.

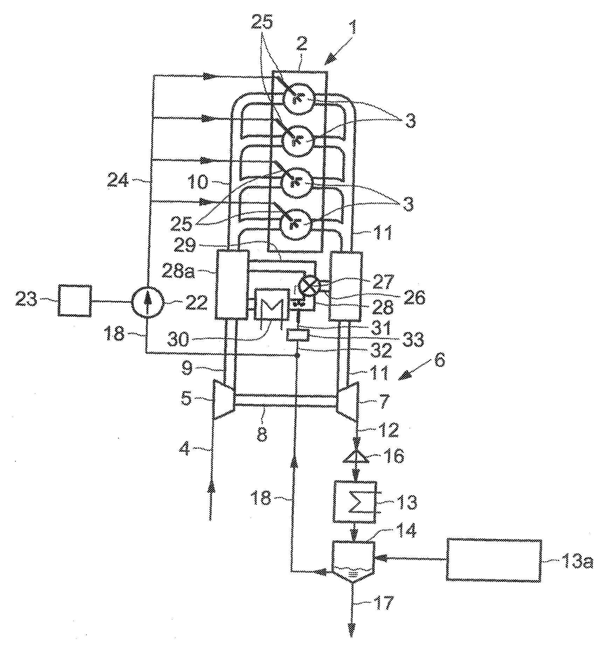

L'invention sera mieux comprise à l'étude d'un mode de réalisation particulier pris à titre d'exemple nullement limitatif et illustré par la figure unique annexée qui montre schématiquement les principaux éléments d'un dispositif selon l'invention.

Tel qu'il est illustré sur la figure, un moteur à combustion interne représenté schématiquement sous la référence 1 comprend une culasse 2 et quatre cylindres munis chacun d'une chambre de combustion 3. Dans l'exemple illustré, l'air frais admis par la conduite d'entrée d'air 4 est tout d'abord comprimé dans un compresseur 5 d'un groupe turbocompresseur 6 comportant le compresseur 5 et une turbine de détente 7 montée sur le même arbre d'entraînement mécanique 8 que le compresseur de sorte que la turbine 7 peut entraîner en rotation le compresseur 5. L'air comprimé réchauffé par la compression est amené par la conduite 9 dans la conduite d'admission 10 connectée aux différentes chambres de combustion 3.

La conduite d'échappement 11 amène les gaz d'échappement à la turbine 7.

Conformément à l'invention, les gaz d'échappement issus de la turbine 7 et déjà partiellement détendus, sont amenés par la conduite 12 à l'entrée d'un condenseur 13, par exemple un échangeur de chaleur approprié. L'eau contenue dans les gaz d'échappement qui traversent le condenseur 13, se condense partiellement et est recueillie dans un réservoir de stockage 14 également traversé par les gaz d'échappement. Les gaz d'échappement issus de la turbine 7 traversent encore, dans l'exemple illustré, un dispositif détendeur 16 qui peut être par exemple une pompe ou tout autre moyen, avant d'être amenés dans le condenseur 13. Les gaz d'échappement issus du réservoir 14 sont ensuite amenés à la conduite d'échappement 17 qui comprend encore des dispositifs complémentaires tels que pot d'échappement catalytique et/ou filtre à particules, non représentés sur la figure. Le dispositif détendeur 16 permet de diminuer la température des gaz avant leur entrée dans le condenseur 13.

Selon l'invention, l'eau sous forme liquide, stockée dans le réservoir 14 est véhiculée par la conduite 18 jusqu'à une pompe de circulation 22 à débit variable commandée par le bloc de commande 23.L'eau liquide véhiculée par la pompe 22 est amenée par la conduite 24 sur quatre injecteurs 25, chaque injecteur étant capable d'injecter l'eau dans l'une des chambres de combustion 3.

Comme illustré sur la figure, l'eau récupérée dans le réservoir de stockage 14 peut également provenir en partie d'un dispositif condenseur 13a faisant partie d'une installation de climatisation équipant le véhicule automobile.

Le moteur comprend des moyens de recirculation partielle des gaz d'échappement (EGR) illustrés schématiquement sur la figure. Ces moyens comprennent un piquage 26 prévu sur la conduite d'échappement 11 relié à une vanne de commutation commandée 27. La vanne 27 permet le passage des gaz d'échappement recyclés (EGR) soit par une conduite de recirculation 28 soit par une conduite de dérivation 29. La conduite de dérivation 29 est reliée à la conduite d'admission 10 par l'intermédiaire d'une vanne de recirculation 28a, commandée (vanne EGR) de façon à effectuer une recirculation de gaz d'échappement à haute température. La conduite de recirculation 28, également reliée à la vanne de recirculation 28a, comporte un échangeur de chaleur 30 et un injecteur 31 pour de l'eau liquide pulvérisée dans la conduite de recirculation 28. L'eau liquide amenée à l'injecteur 31 provient du réservoir 14 par une conduite 32 piquée sur la conduite 18. Un dispositif de régulation 33 est capable de réguler la quantité d'eau injectée.

Lorsque la vanne de commutation 27 est placée de façon à faire passer les gaz d'échappement par la conduite de recirculation 28, c'est-à-dire dans le cas d'une stratégie de fonctionnement du moteur avec refroidissement des gaz d'échappement recyclés, la pulvérisation d'eau par l'injecteur 31 provoque un refroidissement des gaz transitant par la conduite de recirculation 28 par évaporation partielle de l'eau injectée. Le reste de l'eau injectée est transporté par les gaz d'échappement recyclés sous forme de fines gouttelettes d'eau qui sont amenées aux chambres de combustion 3 et peuvent ainsi compléter l'action de l'eau injectée par les injecteurs 25. Il résulte de l'injection d'eau dans la conduite de recirculation une forte diminution de température des gaz d'échappement recyclés en amont de l'échangeur 30 Celui-ci suffit alors à refroidir complètement les gaz d'échappement recyclés (EGR) à la température optimale pour le remplissage du moteur. La quantité de gaz d'échappement recyclés est définie par la vanne de recirculation commandée 28a.

Lorsque l'on souhaite faire fonctionner le moteur avec une stratégie de recirculation des gaz d'échappement (EGR) chauds, la vanne de commutation 27 est placée de façon à faire passer les gaz d'échappement recyclés (EGR) directement par la conduite de dérivation 29 jusque dans la conduite d'admission 10. Un tel fonctionnement peut être en particulier opportun pendant les phases de démarrage à froid du moteur.

Bien que dans l'exemple illustré on ait représenté l'existence d'un échangeur de chaleur 30 dans la conduite de recirculation 28, on comprendra que l'on puisse éventuellement supprimer cet échangeur de chaleur et se contenter de la seule injection d'eau par l'injecteur 31 dans la conduite de recirculation, selon le refroidissement souhaité pour les gaz d'échappement recirculés (EGR).

Bien que l'on ait représenté dans l'exemple illustré sur la figure une injection d'eau directement dans les chambres à combustion 3 par les injecteurs 25, on comprendra qu'il soit possible de se contenter d'une injection dans la conduite de recirculation 28 par l'injecteur 31.

L'invention peut être appliquée à tout type de moteur à combustion qu'il s'agisse d'un moteur à essence à allumage commandé ou d'un moteur de type Diesel. L'invention permet de limiter largement les émissions de polluants et d'améliorer le fonctionnement du moteur en diminuant les risques de cliquetis tout en maintenant une compacité acceptable pour le moteur. L'eau injectée dans le circuit de recirculation des gaz d'échappement (EGR) et permettant le refroidissement de ces gaz, provient exclusivement d'un réservoir de stockage alimenté en permanence par le fonctionnement même du moteur et accessoirement par l'installation de climatisation du véhicule automobile.

## Revendications

1. Dispositif de recirculation partielle des gaz d'échappement dans la chambre de combustion d'un moteur à combustion interne, notamment pour véhicule automobile, du type comprenant une conduite de recirculation (28), une vanne de recirculation commandée (28a), et un échangeur de chaleur (30) monté dans la conduite de recirculation (28) pour refroidir les gaz d'échappement recyclés, un dispositif d'injection d'eau (31) étant monté dans la conduite de recirculation (28), **caractérisé par le fait qu'**il comprend un condenseur (13) monté sur la conduite d'échappement du moteur de façon à être traversé par les gaz d'échappement et à condenser partiellement l'eau contenue dans les gaz d'échappement et un réservoir de stockage (14) capable de récupérer l'eau obtenue par condensation, le réservoir étant relié au dispositif d'injection d'eau (31).

2. Dispositif selon la revendication 1 **caractérisé par le fait qu'**il comprend un moyen de régulation (33) de la quantité d'eau injectée.

3. Dispositif selon l'une quelconque des revendications précédentes **caractérisé par le fait que** le réservoir (14) est également relié à un dispositif condenseur (26) d'une installation de climatisation équipant le véhicule automobile.

4. Dispositif selon l'une quelconque des revendications précédentes **caractérisé par le fait qu'**un dispositif d'injection d'eau (25) est monté dans la chambre de combustion (3) du moteur et alimenté également en eau provenant du réservoir (14).

5. Dispositif selon l'une quelconque des revendications précédentes **caractérisé par le fait que** le moteur est équipé d'un groupe turbocompresseur (6), le condenseur (13) et le réservoir (14) étant montés en aval de la turbine (7).

6. Dispositif selon la revendication 5 **caractérisé par le fait qu'**un dispositif détendeur (16) est monté an aval de la turbine (7) pour refroidir les gaz d'échappement avant qu'ils pénètrent dans le condenseur (13).

7. Dispositif selon l'une quelconque des revendications précédentes **caractérisé par le fait qu'**une conduite de dérivation (29) munie d'une vanne de commutation commandée (27) est montée sur la conduite de recirculation (28) des gaz d'échappement de façon à by-passer le dispositif d'injection d'eau.

8. Procédé de recirculation partielle des gaz d'échappement dans la chambre de combustion d'un moteur à combustion interne, notamment pour véhicule automobile, **caractérisé par le fait que** l'on injecte de l'eau sous forme liquide dans les gaz d'échappement recyclés et dans la chambre de combustion du moteur, l'eau injectée provenant de la condensation des gaz d'échappement issus du moteur.

9. Procédé selon la revendication 10 **caractérisé par le fait que** l'eau injectée provient également en partie d'une installation de climatisation équipant le véhicule automobile.
